# FASCICULE DE BREVET EUROPEEN

(11) **EP 2 649 362 B1**
(45) Date de publication et mention de la délivrance du brevet: **24.09.2014**
(21) Numéro de dépôt: 11804729.9
(22) Date de dépôt: 06.12.2011
(51) Int. Cl.: F16L 55/172

(54) **DISPOSITIF DE COLMATAGE DE FUITE DANS UNE CANALISATION DE TRANSPORT DE FLUIDE.**
VORRICHTUNG ZUM ABDICHTEN EINES LECKS IN EINEM FLÜSSIGKEITSTRANSPORTROHR
DEVICE FOR SEALING A LEAK IN A FLUID-TRANSPORT PIPE

(30) Priorité: 07.12.2010 FR 1004758
(43) Date de publication de la demande: 16.10.2013
(73) Titulaire: 3x Engineering, 98000 Monaco (FR)
(72) Inventeur: BOULET D'AURIA, Stanislas, F-06230 Villefranche sur Mer (FR)
(86) Numéro de dépôt international: PCT/FR2011/052877
(87) Numéro de publication internationale: WO 2012/076803

(56) Documents cités:
- DE-C- 78 286
- FR-A1- 2 782 367

## Description

La présente invention concerne la réparation de canalisations de transport d'eau, de gaz et d'autres fluides, et en particulier un dispositif de colmatage de fuite dans une canalisation

La réparation d'une canalisation d'eau ou de gaz présentant une fuite peut se faire par différentes techniques. Une technique très répandue consiste à colmater la fuite par l'application d'un élastomère sur les trous ou les fissures de la canalisation au moyen d'un manchon. Un tel manchon est formé de deux demi-coquilles dont la paroi intérieure est en élastomère et adaptées pour entourer la canalisation à l'endroit des fissures. Les demi-coquilles sont fixées entre elles et serrées sur la canalisation par des tiges filetées ou autres moyens.

Malheureusement le colmatage des fuites par ce type de manchon présente de nombreux inconvénients. Il faut en effet serrer le manchon en appliquant une force considérable de manière à ce que l'élastomère applique une pression supérieure à la pression du fluide à l'intérieur de la canalisation qui peut atteindre parfois jusqu 1 à 100 bars. L'application d'une force de serrage importante peut quelquefois créer de nouvelles fissures si la mise en oeuvre est mal faite. En outre, les demi-coquilles utilisées pour former le manchon sont adaptées à un diamètre déterminé de canalisation, et il faut donc prévoir des coquilles ayant autant de diamètres différents qu'il y a de diamètres différents de canalisations.

Une autre technique décrite dans le brevet FR 2.782.367 consiste à utiliser une plaque d'élastomère appliquée contre l'endroit de la canalisation où se produit la fuite, un applicateur de forces et une sangle serrée autour de la canalisation pour appliquer une force de serrage sur l'applicateur de forces. Ce dernier est une plaque rectangulaire ayant la forme d'un treillis comportant des cloisons rigides disposées perpendiculairement à la surface de la canalisation et destinées à appliquer des forces de cisaillement sur la plaque d'élastomère à l'endroit de la fuite.

Bien qu'efficace, le dispositif mentionné ci-dessus présente de nombreux inconvénients. En effet, bien que l'applicateur de forces soit en matière plastique, donc capable d'accepter une déformation, sa rigidité est trop importante pour s'adapter à une fissure de la canalisation où celle-ci comporte un dénivelé important. C'est le cas lorsque la fuite est à l'endroit d'une soudure convexe ou à l'endroit d'un chancre dû à la corrosion qui se, présente comme une cavité d'une certaine profondeur dans la canalisation. Dans ces deux cas, la rigidité de l'applicateur de forces l'empêche de se déformer suffisamment pour épouser les contours du trou ou de la fissure où se produit la fuite, même en utilisant une force de serrage considérable.

C'est pourquoi le but de l'invention est de fournir un dispositif de colmatage de fuite dans une canalisation qui soit rapide à mettre en oeuvre et ne nécessite pas une force de serrage considérable.

Un autre but de l'invention est de fournir un dispositif de colmatage de fuite dans une canalisation capable de s'adapter à la forme concave ou convexe de la canalisation à l'endroit de la fuite.

L'objet de l'inversion est donc un dispositif de colmatage de fuite dans une canalisation selon la revendication 1.

Les buts, objets et autres caractéristiques de l'invention apparaîtront plus clairement à la lecture de la description qui suit faite en référence aux dessins dans lesquels :
la figure 1 représente une canalisation présentant une forme concave à l'endroit de la fuite sur laquelle est installé le dispositif de colmatage de fuite selon l'invention ;
la figure 2 représente une canalisation présentant une forme convexe à l'endroit de la fuite sur laquelle est installé le dispositif de colmatage de fuite selon l'invention ;
la figure 3 représente la grille servant de support aux modules de force du répartiteur de forces, et
la figure 4 représente la grille de support et plusieurs modules de forme différente plus ou moins introduits dans les mailles de la grille.

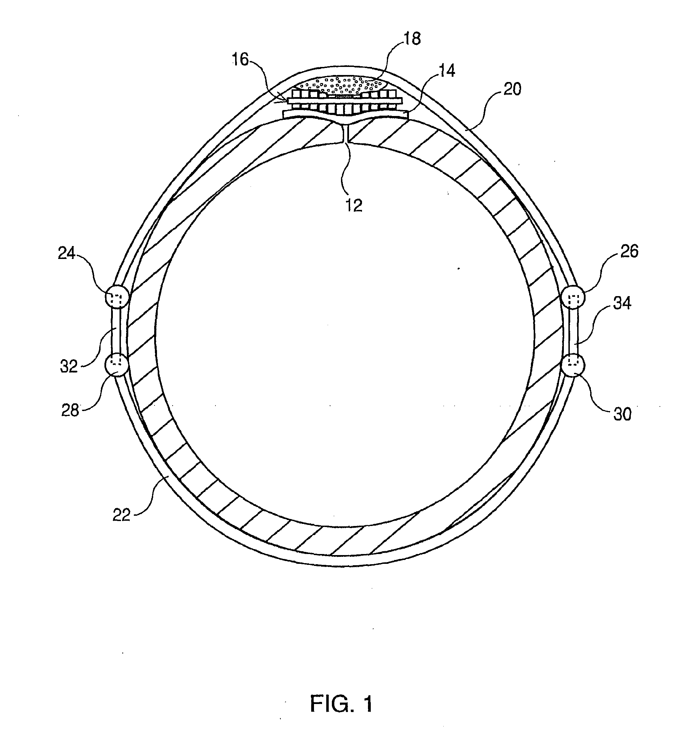

Sur la figure 1 est représentée une canalisation 10 vue en coupe destinée à transporter un fluide tel qu'un liquide ou un gaz, et présentant une fuite causée par un trou ou une fissure 12 dans la partie supérieure de la canalisation. Le trou ou la fissure se trouve dans une cavité ou une partie concave de la canalisation due à la corrosion. Sur l'endroit de la fuite, le dispositif de colmatage comporte une plaque d'élastomère 14 incompressible et déformable et ayant une bonne résistance au fluage tel que du caoutchouc ou du néoprène. Cette couche d'une épaisseur comprise entre 0,3 et 3 cm, est destinée à colmater la fuite en pénétrant par pression dans la partie supérieure du trou ou de la fissure.

Un répartiteur de forces 16 décrit ci-après est placé au dessus de la plaque d'élastomère 14. Le répartiteur 16 a des dimensions approximativement égales à celles de la plaque d'élastomère 14 et est destiné à appliquer et répartir les forces de cisaillement à la plaque d'élastomère 14.

Au dessus du répartiteur de forces 16 se trouve un répartiteur de pression 18 destiné à répartir la pression due forces de serrage provenant du serrage d'une sangle composée de deux brides 20 et 22. L'intérêt de la sangle est d'éviter d'induire des contraintes trop importantes dans la paroi de la canalisation Chaque bride de serrage s'étend entre deux tiges d'extrémité 24 et 26 pour la bride 20, et les tiges d'extrémité 28 et 30 pour la bride 22. Les tiges d'extrémité 24 et 28 sont reliées par une tige filetée 32 et les tiges d'extrémité 26 et 30 sont reliées par une tige filetée 34. En effectuant la rotation des tiges filetées, celles-ci sont introduites progressivement dans des alésages les tiges d'extrémité des brides et provoquent le serrage de la sangle autour de la canalisation 10. Au fur et à mesure du serrage, des forces de cisaillement sont appliquées à la plaque d'élastomère 14 qui vient ainsi colmater la fissure 12.

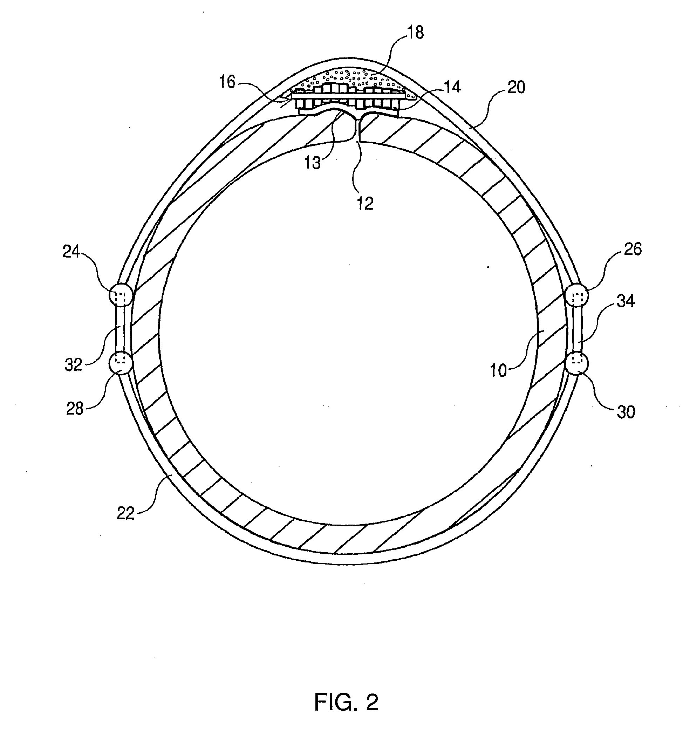

La figure 2 représente le dispositif selon l'invention appliqué à une canalisation dans le but de colmater une fuite due à un trou ou une fissure 12 se trouvant à proximité d'une soudure 13. Comme décrit ci-dessous, le répartiteur de forces 16 s'adapte parfaitement aux variations de hauteur de la canalisation dues à la soudure 13 et au creux qui suit dû au trou ou à la fissure. Comme dans le cas de la figure 1, un répartiteur de pression 18 est placé au dessus du répartiteur de forces 16 dans le but de répartir les forces de serrage provenant du serrage de la sangle composée des deux brins 20 et 22.

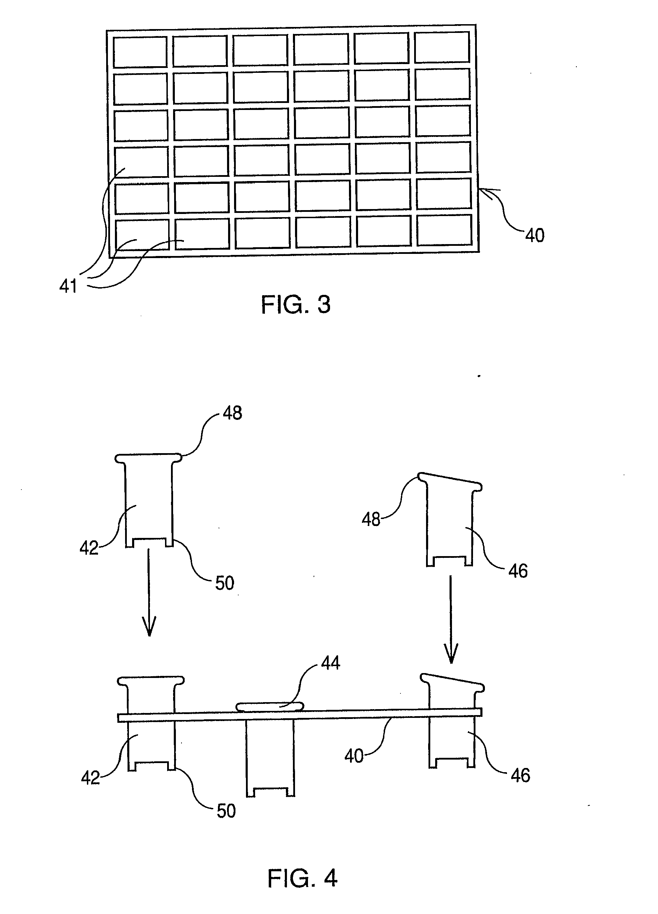

En référence aux figures 3 et 4, le répartiteur de forces est composé d'une grille de support 40 ayant la forme d'une plaque rectangulaire dont la taille est adaptée à la dimension du trou ou de la fissure. Les cloisons de la grille ont une profondeur de 2mm et une épaisseur inférieure à 1 mm. Le matériau utilisé est de préférence une matière plastique rigide mais déformable telle que du polyamide, du polypropylène ou du polycarbonate, ou est en métal présentant la même caractéristique de déformabilité notamment en aluminium. La déformabilité de la grille 40 permet ainsi d'utiliser le même répartiteur de forces quel que soit le diamètre de la canalisation à colmater.

Dans chacune des mailles 41 de la grille 40 est introduit un module de force 42, 44 ou 46 illustrés sur la figure 4. Chaque module de force a une section rectangulaire de dimensions légèrement inférieures à celles de la maille de manière à ce que le module puisse être introduit dans la maille. De façon à être retenu par la grille lorsque le module est introduit dans la maille, le module comporte de préférence un rebord 48. La hauteur de chaque module est comprise entre 5 mm et 40 mm.

Comme on le voit sur les figures 1 et 2, les modules de force sont introduits dans la grille de façon coulissante et dépassent au dessus de la grille d'une hauteur qui dépend des variations de hauteur de la canalisation à l'endroit de la fissure. Ainsi, sur la figure 1, les modules de force sont introduits plus profondément dans la grille au centre de l'endroit où se trouve le trou ou la fissure du fait que c'est une partie concave. Par contre, sur la figure 2, les modules sont introduits moins profondément dans la grille à l'endroit de la soudure 13 qui est une partie convexe de la canalisation.

Par conséquent le répartiteur de forces 16 formé de la grille 40 et des modules 42, 44 ou 46 s'adapte parfaitement à toutes les formes de la canalisation à l'endroit de la fuite.

A noter que la grille pourrait avoir tout autre forme qu'une forme triangulaire et que les mailles de la grille ne sont pas forcément de forme rectangulaire.

Chaque module de force 42, 44 ou 46 comporte à son extrémité inférieure une nervure sur au moins un côté du module et de préférence sur tous les côtés de façon à constituer un rectangle, ceci dans le but d'exercer des forces de cisaillement perpendiculaires à la plaque d'élastomère 14.

Selon une variante, les modules peuvent avoir une hauteur différente augmentant au fur et à mesure que l'on va du bord de la grille vers son centre de manière à ce que le répartiteur de forces 16 présente globalement une forme convexe adaptée à la sangle de serrage. Dans ce cas, l'extrémité supérieure de chaque module est de préférence inclinée comme illustré pour le module 46 illustré sur la figure 4, cette inclinaison étant de plus en plus faible lorsqu'on va des bords de la gille vers le centre de la grille.

Le répartiteur de pression 18 placé au dessus du répartiteur de forces 16 a pour but de répartir uniformément les pressions exercées par la sangle de serrage sur le répartiteur de forces 16 et en particulier sur les extrémités des modules de force qui, comme on l'a vu ci-dessus, ne sont pas à la même hauteur du fait que la surface de la canalisation présente des variations de hauteur dues à la forme concave ou convexe à l'endroit de la fuite. Selon une caractéristique préférée de l'invention, le répartiteur de pression 18 est un sac contenant des billes en matière plastique ou en métal ayant une taille (ou un diamètre si elles sont sphériques) inférieure à 5 mm, de manière à ce que le sac de billes puisse s'adapter à la moindre protubérance du répartiteur de forces et remplir les espaces et interstices entre les extrémités des modules de pression.

Bien que la description ci-dessus présente un mode de réalisation préféré de l'invention, il est clair que des modifications peuvent y être apportées sans sortir du cadre de l'invention. Ainsi, tout mécanisme de serrage peut être utilisé pour mettre en oeuvre l'invention. Cependant l'utilisation de deux brides (illustrée sur les figures 1 et 2) et de façon générale de plusieurs brides reliées entre elles par des moyens de serrage appropriés rapprochant les extrémités des brides entre elles lors du serrage (ces moyens de serrage pouvant être notamment des tiges filetées comme décrit dans le mode de réalisation préféré), est un système qui permet de s'adapter à tous les diamètres de canalisation, chaque canalisation pouvant exiger d'utiliser plusieurs brides identiques reliées entre elles. En outre, il est judicieux que les brides qui composent la sangle soient dans une gaine de sorte qu'une partie de l'effort de serrage ne soit pas absorbé par les forces de frottement comme c'est le cas lorsque les brides frottent directement sur la canalisation durant le serrage.

## Revendications

1. Dispositif de colmatage de fuite dans une canalisation (10) présentant au moins un trou ou une fissure (12), comprenant une plaque d'élastomère (14) appliquée contre l'endroit de la fuite par un répartiteur de forces (16) composé d'une grille de support (40) et une sangle de serrage (20, 22) disposée autour de la canalisation pour appliquer une force sur ledit répartiteur de forces;
un répartiteur de pression (18) placé au dessus dudit répartiteur de forces (16) ayant pour but de répartir uniformément les pression exercées par ladite sangle de serrage (20, 22) sur ledit répartiteur de forces,
ledit dispositif étant **caractérisé en ce que** ledit répartiteur de forces est composé de modules de force (42, 44 ou 46) indépendants, chacun desdits modules étant placé de façon coulissante dans une des mailles de ladite grille et disposés perpendiculairement à la canalisation de façon à appliquer des forces de cisaillement sur ladite plaque d'élastomère à l'endroit de la fuite obligeant l'élastomère à se déformer de manière à épouser la forme concave ou convexe de la canalisation à l'endroit de la fuite et ainsi colmater le trou ou la fissure.

2. Dispositif selon la revendication 1, dans lequel ledit répartiteur de pression (18) est un sac contenant des billes d'une taille inférieure à 5 mm.

3. Dispositif selon la revendication 1 ou 2, dans lequel ladite grille de support est de forme rectangulaire et comporte des mailles de forme rectangulaire.

4. Dispositif selon la revendication 3, dans lequel chacun desdits modules de force (42, 44 ou 46) comporte à son extrémité inférieure une nervure sur au moins un côté du module, ceci dans le but d'exercer des forces de cisaillement perpendiculaires à la plaque d'élastomère (14).

5. Dispositif selon la revendication 3 ou 4, dans lequel chacun desdits modules de force (42, 44 ou 46) comporte au moins un rebord (48) de manière à être retenu par la grille lorsque le module est introduit dans la maille.

6. Dispositif selon la revendication 3 ou 4 dans lequel lesdits modules de force (46) sont de hauteur différente, cette hauteur augmentant au fur et à mesure que l'on va du bord de la grille vers son centre de manière à ce que le répartiteur de forces (16) présente globalement une forme convexe adaptée à la sangle de serrage (20,22).

## Patentansprüche

1. Vorrichtung zur Leckabdichtung in einer mindestens ein Loch oder einen Riss (12) aufweisenden Rohrleitung (10), die eine Elastomerplatte (14), die von einem aus einem Traggitter (40) bestehenden Kraftverteiler (16) gegen die Leckstelle angelegt wird, und einen Spanngurt (20, 22) enthält, der um die Rohrleitung herum angeordnet wird, um eine Kraft auf den Kraftverteiler auszuüben, wobei ein oberhalb des Kraftverteilers (16) angeordneter Druckverteiler (18) zum Zweck hat, die vom Spanngurt (20, 22) auf den Kraftverteiler ausgeübten Drücke gleichmäßig zu verteilen;
wobei die Vorrichtung **dadurch gekennzeichnet ist, dass** der Kraftverteiler aus unabhängigen Kraftmodulen (42, 44 oder 46) besteht, wobei jedes der Module in einer der Maschen des Gitters gleitend platziert und lotrecht zur Rohrleitung angeordnet ist, um Scherkräfte auf die Elastomerplatte an der Leckstelle auszuüben, die das Elastomermaterial dazu zwingen, sich so zu verformen, dass es die konkave oder konvexe Form der Rohrleitung an der Leckstelle annimmt und so das Loch oder den Riss verstopft.

2. Vorrichtung nach Anspruch 1, wobei der Druckverteiler (18) eine Tasche ist, die Kugeln einer Größe von weniger als 5 mm enthält.

3. Vorrichtung nach Anspruch 1 oder 2, wobei das Traggitter eine rechtwinklige Form hat und Maschen rechtwinkliger Form aufweist.

4. Vorrichtung nach Anspruch 3, wobei jedes der Kraftmodule (42, 44 oder 46) an seinem unteren Ende eine Rippe auf mindestens einer Seite des Moduls aufweist, mit dem Zweck, Scherkräfte lotrecht zur Elastomerplatte (14) auszuüben.

5. Vorrichtung nach Anspruch 3 oder 4, wobei jedes der Kraftmodule (42, 44 oder 46) mindestens eine Randleiste (48) aufweist, um vom Gitter gehalten zu werden, wenn das Modul in die Masche eingeführt wird.

6. Vorrichtung nach Anspruch 3 oder 4, wobei die Kraftmodule (46) unterschiedliche Höhen haben, wobei diese Höhe nach und nach vom Rand des Gitters zu seiner Mitte zunimmt, damit der Kraftverteiler (16) global eine konvexe Form hat, die an den Spanngurt (20, 22) angepasst ist.

## Claims

1. A device for sealing a leak in a pipe (10) having at least one hole or crack (12), including an elastomer plate (14) applied against the site of the leak by a force distributor (16) consists of a support grid (40) and a tightening strap (20, 22) placed around the pipe in order to apply a force to said force distributor, a pressure distributor (18) placed on top of said force distributor (16) is intended to uniformly distribute the pressure resulting from the clamping forces generated by said tightening strap (20, 22) on said force distributor;
said device being **characterised in that** said force distributor consists of separate force modules (42, 44 or 46), each of said modules being placed in a sliding manner into one of the meshes of said grid and arranged perpendicularly to the pipe so as to apply shear forces to said elastomer plate at the site of the leak, forcing the elastomer to deform so as to match the concave or convex shape of the pipe at the site of the leak and thus to seal the hole or crack.

2. The device according to claim 1, wherein said pressure distributor (18) is a bag containing beads less than 5 mm in size.

3. The device according to claim 1 or 2, wherein said support grid is rectangular in shape and includes rectangular-shaped meshes.

4. The device according to claim 3, wherein each of said force modules (42, 44 or 46) includes, at its lower end, a rib on at least one side of the module, for the purpose of exerting shear forces perpendicularly to the elastomer plate (14).

5. The device according to claim 3 or 4, wherein each of said force modules (42, 44 or 46) includes at least a rim (48) so as to be retained by the grid when the module is introduced into the mesh.

6. The device according to claim 3 or 4, wherein said force modules (46) are of different height, this height increasing gradually from the edge of the grid toward its centre so that the force distributor (16) has a general convex shape adapted to the tightening strap (20, 22).
